# EUROPÄISCHE PATENTSCHRIFT

(11) **EP 1 423 622 B1**
(45) Veröffentlichungstag und Bekanntmachung des Hinweises auf die Patenterteilung: **05.04.2006**
(21) Anmeldenummer: 02767328.4
(22) Anmeldetag: 06.08.2002
(51) Int. Cl.: F16D 25/10, F16D 21/06, F16D 25/0638, F16D 25/12

(54) **KUPPLUNGSSYSTEM MIT EINER NASSLAUFENDEN ODER/UND HYDRAULISCH BETÄTIGBAREN MEHRFACH-KUPPLUNGSEINRICHTUNG**
COUPLING SYSTEM COMPRISING A WET RUNNING OR/AND HYDRAULICALLY ACTUATABLE MULTIPLE COUPLING DEVICE
SYSTEME DE COUPLAGE COMPRENANT UN DISPOSITIF DE COUPLAGE MULTIPLE A FONCTIONNEMENT PAR VOIE HUMIDE ET/OU A COMMANDE HYDRAULIQUE

(30) Priorität: 07.09.2001 DE 10143834
(43) Veröffentlichungstag der Anmeldung: 02.06.2004
(73) Patentinhaber: ZF Sachs AG, 97424 Schweinfurt (DE)
(72) Erfinder: EBERT, Angelika, 97421 Schweinfurt (DE); GROSSPIETSCH, Wolfgang, 97422 Schweinfurt (DE); KRAUS, Paul, 97464 Niederwerrn (DE); KUHSTREBE, Jochen, 97318 Biebelried/Westheim (DE); KUNDERMANN, Wolfgang, 97422 Schweinfurt (DE); REISSER, Wolfgang, 97526 Sennfeld (DE); STEINER, Eduard, 97228 Rottendorf (DE)
(86) Internationale Anmeldenummer: PCT/EP2002/008754
(87) Internationale Veröffentlichungsnummer: WO 2003/023243

(56) Entgegenhaltungen:
- DE-A- 10 004 179
- GB-A- 1 348 645
- US-A- 2 919 778

## Beschreibung

### Technisches Gebiet

Die Erfindung betrifft eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei von den beiden Getriebeeingangswellen die eine sich durch die andere erstreckt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden nur als Eingangsnabe bezeichnet) aufweist, die mit einer Eingangsseite der ersten Kupplungsanordnung und einer Eingangsseite der zweiten Kupplungsanordnung in Drehmitnahmeverbindung steht. Die Erfindung betrifft speziell eine derartige Kupplungseinrichtung, bei der die Kupplungsanordnungen jeweils mit einem integrierten, sich im Betrieb mitdrehenden hydraulischen Nehmerzylinder ausgeführt sind, über den die jeweilige Kupplungsanordnung auf hydraulischem Wege betätigbar ist, sowie eine derartige Kupplungseinrichtung, bei der die Kupplungsanordnungen für ein Laufen unter Einwirkung eines Betriebsmediums vorgesehen, insbesondere als nasslaufende Lamellen-Kupplungsanordnung ausgeführt sind. Die Erfindung betrifft damit ferner ein eine derartige Mehrfach-Kupplungseinrichtung umfassendes Kupplungssystem, das ferner ein Hydrauliksystem zur Betätigung der Kupplungsanordnungen auf hydraulischem Wege unter Vermittlung der hydraulischen Nehmerzylinder oder/und ein Betriebsmedium-Versorgungssystem zur Versorgung der Kupplungsanordnungen mit Betriebsmedium umfasst, wobei das Hydrauliksystem wenigstens eine Hydraulikdruckquellenanordnung und eine die hydraulischen Nehmerzylinder mit der Hydraulikdruckquellenanordnung verbindende Hydraulikleitungsanordnung und das Betriebsmedium-Versorgungssystem wenigstens eine Betriebsmediumquellenanordnung und eine Betriebsmediumleitungsanordnung umfasst, über die den Kupplungsanordnungen Betriebsmedium zuführbar ist, wobei darauf hinzuweisen ist, dass es nicht ausgeschlossen ist, dass eine gemeinsame Quellenanordnung sowohl dem Betriebsmedium-Versorgungssystem und dem Hydrauliksystem zugeordnet ist und sowohl Betriebsmedium als auch Hydraulikdruckmedium bereitstellt

### Stand der Technik

Mehrfach-Kupplungseinrichtungen, speziell Doppel-Kupplungseinrichtungen der eingangs angesprochenen Art sind beispielsweise aus der US 2 919 778 bekannt. Derartige, auch als Doppelkupplungen bezeichnete Kupplungseinrichtungen haben in jüngerer Zeit ein größeres Interesse gefunden, da sie in Verbindung mit einem so genannten Lastschalt- oder Doppelkupplungsgetriebe bei entsprechender Automatisierung einen Fahrkomfort zu bieten versprechen, der dem Fahrkomfort eines herkömmlichen Automatikgetriebes mit Drehmomentwandler entspricht, ohne dass die Verluste eines Drehmomentwandlers auftreten. Ein wichtiger Faktor bei der Auslegung der Kupplungseinrichtungen ist der für die Kupplungseinrichtung benötigte Bauraum, insbesondere der benötigte axiale Bauraum, das Gewicht der Kupplungseinrichtung und die Dichtheit und Dauerfestigkeit von Drehzuführungen zur Zufuhr von Betriebsmedium bzw. Hydraulikdruckmedium. Die aus der US 2 919 778 bekannten Doppelkupplung ist für die Anordnung in einem Antriebsstrang eines Kraftfahrzeugs zwischen einer Antriebseinheit und einem Getriebe vorgesehen, wobei die Kupplungseinrichtung eine einer ersten Getriebeeingangswelle zugeordnete erste Kupplungsanordnung und eine einer zweiten Getriebeeingangswelle zugeordnete zweite Kupplungsanordnung aufweist, wobei die beiden Kupplungsanordnungen koaxial zueinander angeordnet sind. Die beiden Kupplungsanordnungen werden über integrierte mitrotierende Nehmerzylinder betätigt. Hierzu sind in der Eingangsnabe der Kupplungseinrichtung Hydraulikkanäle angeordnet, welche die Nehmerzylinder über eine Drehdurchführung mit stationären von radial außen her geführten Hydraulikleitungen verbinden.

Weiterhin sind Doppel-Kupplungseinrichtungen aus der DE 100 04 179 A1 bekannt. Bei diesen Konstruktionen ist getriebeseitig eine Anschlusshülse vorgesehen, die eine mit Ölkanälen ausgeführte, an der radial äußeren Getriebeeingangswelle gelagerte Lagerhülse der Doppelkupplungen aufnimmt und mit dieser Drehdurchführungen bildet. Sowohl die Zufuhr des Hydraulikmediums zu den beiden Nehmerzylindem als auch die Zufuhr von Kühlöl erfolgt von der Getriebeseite her unter Vermittlung der Lagerhülse und der Aufnahmehülse.

Die Lagerhülse und die zugeordneten Aufnahmehülsen weisen ein zumindest nach heutigen Maßstäben nicht unerhebliches Gewicht auf und tragen auch nicht unerheblich zur axialen Gesamt-Baulänge der Kupplungseinrichtung bei.

### Darstellung der Erfindung

Um dem Konstrukteur bei der Auslegung der Kupplungseinrichtung bzw. des Getriebes, insbesondere des gesamten Antriebsstrangs, eine größere Freiheit zu geben, schlägt die Erfindung demgegenüber ein Kupplugssystem nach Anspruch 1 vor.

Nach dem Erfindungsvorschlag wird die Eingangsnabe bzw. die sich mit der Eingangsnabe zur Drehmitnahme verbundene Komponente in die Zufuhr von Betriebsmedium in die Kupplungseinrichtung bzw. für den Anschluss wenigstens eines der hydraulischen Nehmerzylinder an der zugeordneten Hydraulikdruckquellenanordnung einbezogen, und es ist die von radial außen oder/und von der Antriebseinheit zur Kupplungseinrichtung herangeführte Leitungsanordnung vorgesehen, so dass die Lagerhülse gemäß den Konstruktionen der DE 100 04 179 A1 insoweit entbehrlich erscheint und ggf. entfallen kann, wodurch Gewicht eingespart und die Bauteilevielfalt reduziert wird. Auf Grundlage des Erfindungsvorschlags werden vielfältige Möglichkeiten für die Zufuhr von Betriebsmedium bzw. für die hydraulische Anbindung der Nehmerzylinder an der zugeordneten Hydraulikdruckquelle eröffnet. Insbesondere ist es nicht mehr erforderlich, Platz für eine Hydraulikmedium- bzw. Betriebsmediumzuführeinrichtung am bzw. im Getriebe vorzusehen, und es kommen auch Getriebebauarten in Betracht, die eine derartige Lösung überhaupt nicht erlaubt. Die Verwendung von elektrisch angetriebenen Pumpenanordnungen für die Bereitstellung des Hydraulikmediums bzw. Betriebsmediums wird besonders einfach und es wird in diesem Zusammenhang insbesondere daran gedacht, dass diese im bzw. in der Nähe des Kupptungsbauraums angeordnet werden können. In diesem Falle wäre eine Zuführung von der Getriebeseite her konstruktiv nur aufwendig zu realisieren.

Gegenüber der bekannten Lösung gemäß DE 100 04 179 A1 mit der Lagerhülse ergibt sich überdies der Vorteil, dass die Drehdurchführung nicht durch die am Getriebe angebaute Kupplungseinrichtung verdeckt ist. Bei der Konstruktion gemäß der DE 100 04 179 A1 besteht die Gefahr, dass Dichtungen an den Bohrungen der Hülse beim Einbau der Kupplungseinrichtung beschädigt werden. Diese Gefahr ist vermieden oder zumindest beherrschbar, wenn die Drehdurchführung unabhängig von der Montage der Kupplungseinrichtung am Getriebe fertiggestellt wird oder/und wenn die Drehdurchführung im montierten Zustand der Kupplungseinrichtung noch zugänglich ist.

Bevorzugt ist eine integral ausgeführte Leitungsanordnung, die von radial außen oder/und von der Antriebseinheit her in Richtung zur Eingangsnabe bzw. der Komponente geführt oder führbar ist und die wenigstens eine Hydraulikleitung und die wenigstens eine Betriebsmediumleitung aufweist.

Vorteilhaft kann eine integral ausgeführte Drehdurchführung vorgesehen sein, die wenigstens einen an der Hydraulikleitungsanordnung angeschlossenen Hydraulikabschnitt und wenigstens einen an der Betriebsmediumleitungsanordnung angeschlossenen Betriebsmediumabschnitt aufweist.

Die Drehdurchführung bzw. der Hydraulikabschnitt oder/und der Betriebsmediumabschnitt kann/können als axiale Drehdurchführung ausgeführt sein, die eine Betriebsmediumflussverbindung bzw. Hydraulikdruckmediumverbindung in axialer Richtung vermittelt. Eine andere Möglichkeit ist, dass die Drehdurchführung bzw. der Hydraulikabschnitt oder/und der Hydraulikmediumabschnitt als radiale Drehdurchführung ausgeführt ist, die eine Betriebsmediumflussverbindung bzw. Hydraulikdruckmediumflussverbindung in radialer Richtung vermittelt.

Die Drehdurchführung kann einen im Betrieb im Wesentlichen stationären Statorabschnitt und einen im Betrieb rotierenden Rotorabschnitt aufweisen. Der Rotorabschnitt kann von der Eingangsnabe selbst oder/und der mit der Eingangsnabe zur Drehmitnahme verbundenen Komponente gebildet sein, wobei die mit der Eingangsnabe zur Drehmitnahme verbundene Komponente vorzugsweise in einem Momentenübertragungsweg zwischen einer die Eingangsnabe umfassenden Eingangsseite der Kupplungseinrichtung und wenigstens einer Ausgangsseite der Kupplungseinrichtung liegt. Die Komponente kann beispielsweise ein Mitnehmerblech oder dergleichen sein, das die Eingangsnabe mit einem Lamellenträger der Kupplungseinrichtung verbindet.

In der Regel wird die Kupplungseinrichtung in einem von einer Getriebegehäuseglocke begrenzten Aufnahmeraum aufgenommen sein. Der Aufnahmeraum kann, beispielsweise im Falle von nasslaufenden Lamelfen-Kupplungsanordnungen, durch eine ggf. deckelartige Wandung in Richtung zur Antriebseinheit geschlossen sein, wobei eine Öffnung zur Ankopplung der Eingangsnabe an einer Abtriebswelle der Antriebseinheit, ggf. Ober eine Torsionsschwingungsdämpferanordnung, vorgesehen sein wird. Hierzu wird weiterbildend vorgeschlagen, dass die wenigstens eine Hydraulikleitung oder/und die wenigstens eine Betriebsmediumleitung zumindest bereichsweise an der Wandung festgelegt oder in die Wandung integriert ist oder/und dass der Statorabschnitt der Drehdurchführung an der Wandung gehalten oder in diese integriert ist.

Man kann vorteilhaft vorsehen, dass der Statorabschnitt der Drehdurchführung über wenigstens ein Radiallager oder/und wenigstens eine Axiallager an der Eingangsnabe oder/und der mit der Eingangsnabe zur Drehmitnahme verbundenen Komponente relativverdrehbar gelagert ist oder/und dass der Statorabschnitt in einer zugeordneten Aufnahme eines den Rotorabschnitt bildenden Bereichs der Eingangsnabe aufgenommen ist.

Eine bevorzugte Ausgestaltung zeichnet sich dadurch aus, dass die wenigstens eine Hydraulikleitung oder/und die wenigstens eine Betriebsmediumleitung in einem Axialbereich zwischen der Kupplungseinrichtung und der Antriebseinheit, gegebenenfalls in einem Axialbereich zwischen den Kupplungseinrichtung und einer die Kupplungseinrichtung mit der Antriebseinheit verbindenden Torsionsschwingungsdämpferanordnung, von radial außen zur Drehdurchführung geführt oder führbar ist.

Montage und Wartung wird besonders einfach, wenn die wenigstens eine Hydraulikleitung oder/und die wenigstens eine Betriebsmediumleitung mit der Drehdurchführung oder/und mit einer getriebegehäuseseitigen oder antriebseinheitsseitigen Anschlussstelle mittels einer Steckverbindung verbunden oder verbindbar ist.

Die Erfindungs- und Weiterbildungsvorschläge gemäß dem ersten Aspekt der Erfindung können vorteilhaft auf Grundlage einer Konstruktion ausgeführt werden, wie sie im Folgenden angegeben wird, wobei dieser Konstruktion aber eine eigenständige Erfindungsqualität zukommt und damit unabhängig von der Ausbildung der Eingangsnabe bzw. der weiteren, mit der Eingangsnabe zur Drehmitnahme verbundenen Komponente mit wenigstens einem Kanal oder Durchgang unter Schutz gestellt werden soll.

Die Erfindung geht diesbezüglich aus von einer Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle zugeordnete erste Lamellen-Kupplungsanordnung und eine einer zweiten Getriebeeingangswelle zugeordnete zweite Lamellen-Kupplungsanordnung aufweist, wobei von den beiden Getriebeeingangswellen die eine sich durch die andere erstreckt und von einem ersten Lamellenpaket der ersten Kupplungsanordnung und einem zweiten Lamellenpaket der zweiten Kupplungsanordnung das eine das andere zumindest in einem axialen Überlappungsbereich radial außen umgibt, wobei eine Eingangsseite der Kupplungseinrichtung eine an einer Abtriebswelle der Antriebseinheit direkt oder indirekt angekoppelte oder ankoppelbare Eingangsnabe oder Eingangswelle (im Folgenden nur als Eingangsnabe bezeichnet) aufweist, die mit einem Außenlamellenträger der ersten Kupplungsanordnung und einem Außenlamellenträger der zweiten Kupplungsanordnung in Drehmitnahmeverbindung steht, wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt und einen sich von diesem in radialer Richtung anschließenden, mit dem Lamellenhalteabschnitt einstückigen oder daran fest angebrachten Trägerabschnitt aufweisen, und wobei ein jeweiliger Innenlamellenträger der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist.

Eine derartige Doppelkupplungseinrichtung ist aus der schon erwähnten DE 100 04 179 A1 bekannt. Die beiden Außenlamellenträger weisten jeweils einen an der oben schon erwähnten Hülse angebrachten Trägerabschnitt auf, der sich von der Hülse (also von radial innen) zum Lamellenhalteabschnitt (also nach radial außen) erstreckt.

Demgegenüber schlägt die Erfindung nach einem zweiten Aspekt vor, dass der Trägerabschnitt des zum radial inneren Lamellenpaket zugehörigen Außenlamellenträgers am Lamellenhalteabschnitt des zum radial äußeren Lamettenpaket zugehörigen Außenlamellenträgers gehalten ist und sich von diesem nach radial innen erstreckt.

Der Erfindungsvorschlag eröffnet viele Vorteile. So kann die Kupplungseinrichtung besonders kompakt ausgeführt werden. Ferner wird die Möglichkeit eröffnet, die beiden Außenlamellenträger einfach durch Ineinanderstecken zur gemeinsamen Drehung miteinander zu verbinden, wobei vorzugsweise den Außenlamellen des radial äußeren Lamellenpakets zugeordnete Mitnahmeformationen am betreffenden Trägerabschnitt ausgenutzt werden, die mit entsprechenden Gegen-Mitnahmeformationen am Trägerabschnitt des zum radial inneren Lamellenpaket zugehörigen Außenlamellenträgers zusammenwirken.

Die Kupplungsanordnungen können jeweils mit einem integrierten, sich im Betrieb mitdrehenden hydraulischen Nehmerzylinder ausgeführt sein, über den die jeweilige Kupplungsanordnung auf hydraulischen Wege betätigbar ist. Hierzu wird weiterbildend vorgeschlagen, dass ein Nehmerzylinderraum des zur Betätigung des radial äußeren Lamellenpakets dienenden Nehmerzylinders zwischen einem die Eingangsnabe mit dem Lamellenhalteabschnitt des diesem Lamellenpakets zugehörigen Außenlamellenträgers koppelnden Mitnehmer und einem Betätigungskolben des Nehmerzylinders ausgebildet ist und dass der Betätigungskolben sich im Wesentlichen in axialer Richtung erstreckende Betätigungsabschnitte aufweist, denen Aussparungen im Trägerabschnitt des zum radial inneren Lamellenpaket zugehörigen Außenlamellenträgers zugeordnet sind, um durch die Aussparungen auf das radial äußere Lamellenpaket wirken zu können. Ferner wird vorgeschlagen, dass ein Nehmerzylinderraum des zur Betätigung des radial inneren Lamellenpakets dienenden Nehmerzylinders zwischen einer Wandung und einem Betätigungskolben des Nehmerzylinders ausgebildet ist, wobei die Wandung einen Fliehkraftdruckausgleichsraum begrenzt, der dem Betätigungskolben der Kupplungsanordnung mit dem radial äußeren Lamellenpaket zugeordnet ist.

Die Erfindung stellt ferner einen Kraftfahrzeug-Antriebsstrang bereit, der eine vorzugsweise als Verbrennungsmotor ausgeführte Antriebseinheit, ein Getriebe (insbesondere Lastschaltgetriebe) und ein erfindungsgemäßes Kupplungssystem bzw. eine erfindungsgemäße Kupplungseinrichtung aufweist.

Die Erfindung wird im Folgenden anhand von in den Figuren gezeigten Ausführungsbeispielen näher erläutert.
- Fig. 1: zeigt in einer geschnittenen Darstellung eine in einem Antriebsstrang eines Kraftfahrzeugs zwischen einem Getriebe und einer Antriebseinheit (nicht dargestellt) angeordnete Doppelkupplung mit zwei nasslaufenden Lamellen-Kupplungsanordnungen, die auf hydraulischem Wege betätigbar sind.
- Fig.2: zeigt eine Detailvergrößerung der Fig. 1 im Bereich einer der Doppelkupplung zugehörigen Drehdurchführung.
- Fig.3: zeigt in einer Fig. 2 entsprechenden Darstellung eine Ausführungsvariante für eine Drehdurchführung der Doppelkupplung.
- Fg.4: zeigt in einer Fig. 1 entsprechenden Darstellung ein weiteres Ausführungsbeispiel einer erfindungsgemäßen Doppelkupplung.

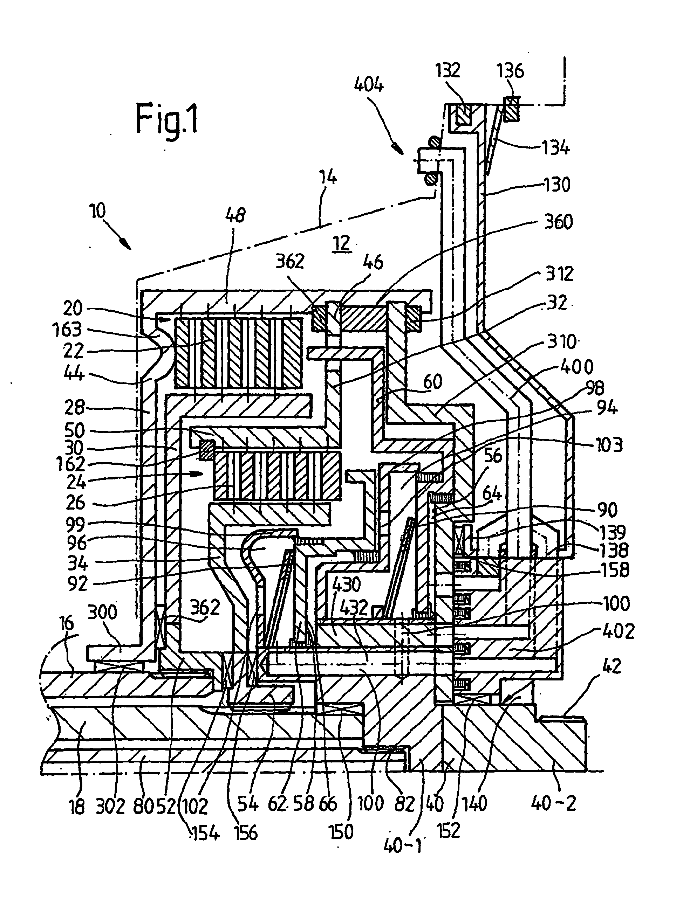

Fig. 1 zeigt eine so genannte Doppelkupplung 10, die in einem Aufnahmeraum 12 einer Getriebegehäuseglocke 14 eines so genannten Lastschaltgetriebes mit zwei radial geschachtelten Getriebeeingangswellen 16 und 18 angeordnet ist. Der äußeren Getriebeeingangswelle 16 können beispielsweise die Getriebegänge 2, 4 und 6 und der inneren Getriebeeingangswelle 18 können beispielsweise die Getriebegänge 1, 3 und 5 sowie R (Rückwärtsgang) zugeordnet sein.

Die Doppelkupplung weist eine radial äußere Kupplungsanordnung 20 mit einem Lamellenpaket 22 und eine radial innere Kupplungsanordnung 24 mit einem Lamellenpaket 26 auf. Die Außenlamellen des Lamellenpakets 22 werden durch einen Außenlamellenträger 28 zur gemeinsamen Drehung mit diesem gehalten. Die Innenlamellen dieses Lamellenpakets 22 werden durch einen Innenlamellenträger 30 zur gemeinsamen Drehung mit diesem gehalten. Die Außenlamellen des Lamellenpakets 26 werden durch einen Außenlamellenträger 32 zur gemeinsamen Drehung mit diesem gehalten, der selbst vom Außenlamellenträger 28 gehalten und mit diesem zur gemeinsamen Drehung verbunden ist. Die Innenlamellen dieses Lamellenpakets 24 werden durch einen Innenlamellenträger 34 zur gemeinsamen Drehung mit diesem gehalten. Das Lamellenpaket 22 umschließt radial außen das Lamellenpaket 26.

Das Antriebsmoment von der Antriebseinheit wird in eine Eingangsnabe 40 der Doppelkupplung eingeleitet, und zwar über Mitnahmeformationen 42, ggf. eine Steckverzahnung 42, der Eingangsnabe 40. Die Eingangsnabe ist beim vorliegenden Beispiel mehrteilig aufgeführt und weist ein die Mitnahmeformationen 42 aufweisendes Teil und Mitnahmeformationen 82, ggf. Steckverzahnungen 82, aufweisendes Teil auf, über die eine sich durch die Getriebeeingangswellen 16 und 18 erstreckende Pumpenantriebswelle 80 mit der Eingangsnabe 40 zur gemeinsamen Drehung verbunden ist. Die beiden Teile der Eingangsnabe werden im Folgenden unter den Bezugszeichen 40-1 und 40-2 angesprochen. Das Antriebsmoment kann von der Antriebseinheit über eine Torsionsschwingungsdämpferanordnung oder Zwei-Massen-Schwungrad-Anordnung auf die Eingangsnabe 40 übertragen werden (vgl. DE 100 04179 A1).

Ähnlich wie bei der bekannten Konstruktion gemäß DE 100 04 179 A1 wird das vermittels der Mitnahmeformationen 42 auf die Eingangsnabe 40 übertragene Antriebsmoment über einen Mitnehmer 310, der beispielsweise an der Eingangsnabe 40 angeschweißt oder über Mitnahmeformationen und Befestigungsmittel unverdrehbar an dieser gehalten ist, auf einen Außenlamellenträger-Lamellenhalteabschnitt 48 der radial äußeren Kupplungsanordnung 20 übertragen. Der Mitnehmer 310 ist durch einen Sicherungsring 312 in Richtung zur Antriebseinheit am Abschnitt 48 axial gesichert.

Der sich im Wesentlichen in axialer Richtung erstreckende Lamellenhalteabschnitt 48, der die Eingangsseite der radial äußeren Kupplungsanordnung 20 bildet, schließt sich an einen sich im Wesentlichen in radialer Richtung erstreckenden Trägerabschnitt 44 an, der radial innen einen Hülsenabschnitt 300 aufweist, der über ein Radiallager 302 an der radial äußeren Getriebeeingangswelle 16 gelagert ist. Der Außenlamellenträger 32 weist einen in Mitnahmeformationen des Lamellenhalteabschnitts 48 mit entsprechenden Gegen-Mitnahmeformationen eingreifenden Trägerabschnitt 46 auf, der sich vom Lamellenhalteabschnitt 48 nach radial innen erstreckt, und an den sich ein sich im Wesentlichen in axialer Richtung erstreckender Lamellenhalteabschnitt 50 anschließt. Der Trägerabschnitt 46 ist in Richtung zur Antriebseinheit über einen Abstandsring 360 und den Mitnehmer 310 am Sicherungsring 312 abgestützt und ist in Richtung zum Getriebe an einem Sicherungsring 362 abgestützt.

Je nach Einkuppelzustand der beiden Kupplungsanordnungen wird das Drehmoment vom betreffenden Außenlamellenträger über das betreffende Lamellenpaket auf den betreffenden Innenlamellenträger 30 bzw. 34 und von diesem auf die dem Innenlamellenträger 30 zugeordnete Getriebeeingangswelle 16 bzw, auf die dem Innenlamellenträger 34 zugeordnete Getriebeeingangswelle 18 übertragen. Hierzu weisen die Innenlamellenträger jeweils eine Koppelnabe 52 bzw. 54 auf, die auf der zugeordneten Getriebeeingangswelle sitzt und über Mitnahmeformationen mit dieser zur gemeinsamen Drehung verbunden ist.

Die beiden Kupplungsanordnungen werden über einen jeweiligen, in die Doppelkupplung integrierten, sich im Betrieb mitdrehenden hydraulischen Nehmerzylinder 56 bzw. 58 betätigt, die einen Betätigungskolben 60 bzw. 62 aufweisen. Eine jeweilige Druckkammer 64 bzw. 66 der Nehmerzylinder ist über eine noch zu beschreibenden Drehdurchführung und eine flexible Leitungsanordnung 400 an einer zugeordneten Hydraulikdruckquelle, beispielsweise eine Steuer/Regel-Ventilanordnung, angeschlossen.

Bei den beiden Kupplungsanordnungen handelt es sich um Kupplungsanordnungen des NORMALERWEISE-OFFEN-Typs. Hierzu sind von Tellerfedern oder dergleichen gebildete Rückstellfederanordnungen 90 und 92 vorgesehen, die vorliegend in einer jeweiligen, dem Betätigungskolben 60 bzw. 62 zugeordneten Fliehkraftdruckausgleichskammer 94 bzw. 96 aufgenommen sind. Die Fliehkraftdruckausgleichskammem sind zwischen dem jeweiligen Betätigungskolben 60 bzw. 62 und einer an der Eingangsnabe 40 (Teil 40-1) angebrachten Wandung 98 bzw. 99 ausgebildet. In Fig. 1 sind verschiedene, den Druckkammern und den Fliehkraftdruckausgleichskammem zugeordnete Dichtungen eingezeichnet, deren Funktion sich dem Fachmann aus der Zeichnung unmittelbar erschließt. Zur Funktion der Fliehkraftdruckausgleichskammem wird auf die DE 100 04179 A1 verwiesen.

Die Fliehkraftdruckausgleichskammem 94 und 96 werden über eine in der Eingangsnabe 40 ausgebildete Kühlölkanalanordnung 100, sowie über die Drehdurchführung und die flexible Leitungsanordnung 400 mit Kühlöl von einer Kühlölversorgung, beispielsweise der erwähnten Ölpumpe, versorgt. Das Kühlöl füllt die jeweilige Fliehkraftdruckausgleichskammer und wirkt insoweit fliehkraftbedingten Hydraulikdruckerhöhungen in der jeweiligen Druckkammer, die auf den jeweiligen Betätigungskolben wirken, entgegen. Aus den Druckausgleichskammem entweicht im Betrieb ein Kühlölstrom durch jeweils wenigstens eine Öffnung 102 bzw. 103 in der betreffenden Wandung 98 bzw. 99. In den Lamellenhalteabschnitten sind Durchtrittsöffnungen für das Kühlöl vorgesehen, so dass das Kühlöl zwischen die Lamellen der Lamellenpakete eintreten und die Lamellen kühlen kann.

Ein die Doppelkupplung 10 enthaltender Teil des Aufnahmeraums 12 dient als Nassraum und ist durch eine deckelartige Verschlusswandung 130, die eine Zentralöffnung für die Eingangsnabe 40 und einen Statorabschnitt 402 der Drehdurchführung aufweist, in Richtung zur Antriebseinheit verschlossen. 132 bezeichnet einen Dichtring, und die im Folgenden nur als Deckel bezeichnete Verschlusswandung 130 ist durch einen Federring 134 gesichert, der sich an einem an der Gehäuseglocke 14 eingesetzten Sicherungsring 136 abstützt.

Die Doppelkupplung 10 ist vermittels ihrer Eingangsnabe 40 über ein Radiallager 150 an der radial inneren Getriebeeingangswelle 18 sowie über ein Radiallager 152 und den Statorabschnitt 402 an einem sich axial erstreckenden, radial inneren Abschnitt 138 des Deckels 130 radial gelagert. Axial ist die Doppelkupplung vermittels ihrer Eingangsnabe über zwei Axiallager 154 und 156 sowie die Koppelnaben 52 und 54 an der radial äußeren Getriebeeingangswelle 16 in Richtung zum Getriebe abgestützt. In Richtung zur Antriebseinheit (Motor) ist die Doppelkupplung 10 über ein zwischen dem Mitnehmer 310 und einem sich an den Abschnitt 138 anschließenden, sich wieder nach radial innen erstreckenden Abschnitt 139 des Deckels 130 angeordnetes Axiallager 158 am Deckel 130 abgestützt. Der als Tellerfeder ausgeführte Federring 134 sorgt dabei für einen Toleranzausgleich. Zu dieser Abstützung trägt auch die Anlage des radial inneren Abschnitts des Mitnehmers 310 am am Deckel 130 befestigten Statorabschnitt 402 der Drehdurchführung bei, und es ist in diesem Zusammenhang auch auf ein Axiallager 362 hinzuweisen, das zwischen den Lamellenträgern 28 und 30 wirksam ist.

Wie aus Fig. 1 zu erkennen, verläuft die flexible Leitungsanordnung 400 im Nassraum zwischen dem Deckel 130 und der Doppelkupplung 10. Ein Anschluss der Leitungsanordnung 400 an einer getriebeseitigen Anschlussstelle kann über eine Steckverbindung 404 realisiert sein, die beim Ausführungsbeispiel radial relativ weit außen liegt und unter Einsatz einfacher O-Ringe ausgeführt ist, die zur Abdichtung dienen.

Die Leitungsanordnung 400 weist eine der Druckkammer 64 zugeordnete Leitung, über die der hydraulische Nehmerzylinder 56 an der zugeordneten Hydraulikdruckquelle angeschlossen bzw. anschließbar ist, eine der Druckkammer 66 zugeordnete Leitung, über die der hydraulische Nehmerzylinder 58 an der zugeordneten Hydraulikdruckquelle angeschlossen bzw. anschließbar ist, und eine gemeinsam den Druckausgleichsräumen 94 und 66 zugeordnete Leitung auf. Die Leitungen sind jeweils mit einem zugeordneten Anschluss des Statorabschnitts 402 der Drehdurchführung verbunden. Der Statorabschnitt 402 ist am Deckel 130 fest und dichtend angebracht. Zwischen dem Statorabschnitt 402 und der Eingangsnabe 40 ist eine Dichtungsanordnung 140 (ggf. umfassend einen Radialwellendichtring) wirksam.

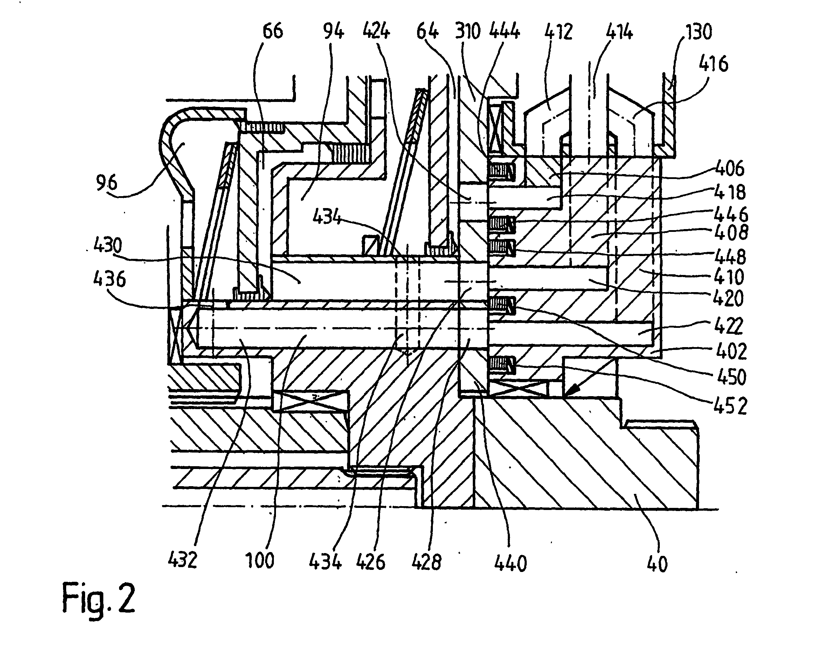

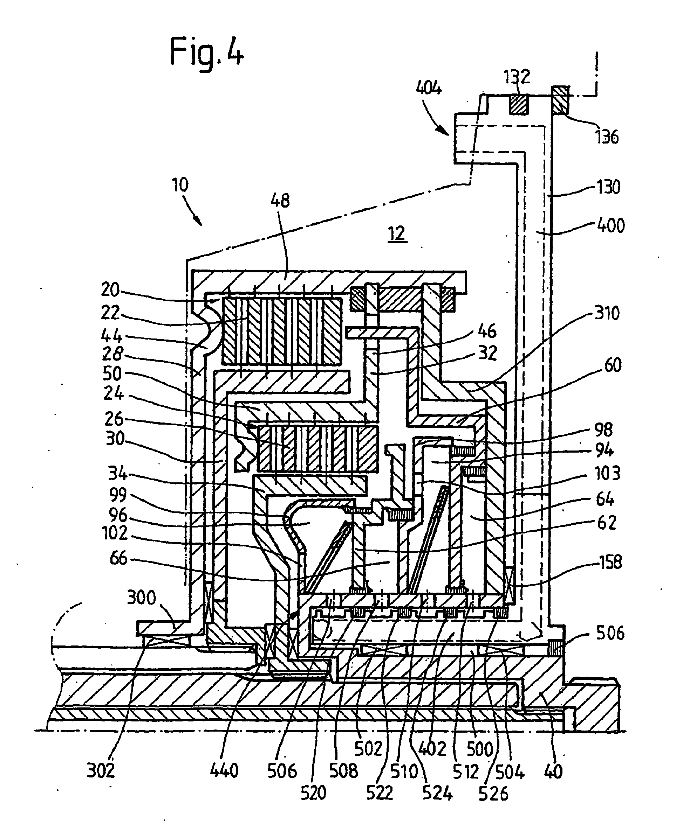

Der Statorabschnitt 402 weist drei axial und in Umfangsrichtung gegeneinander versetzte, sich in radialer Richtung erstreckende Kanäle 406, 408 und 410 auf (vgl. Fig. 2), denen die genannten drei Leitungen (denen in Fig. 4 die Bezugszeichen 412, 414 und 416 zugeordnet sind) angeschlossen sind und die nach radial innen in einen jeweiligen, im Statorabschnitt 402 ausgebildeten Ringkanal 418, 420 bzw. 422 münden.

Den Ringkanälen sind Durchgangsbohrungen 424, 426 und 428 im Mitnehmer 310 zugeordnet, von denen wenigstens eine Durchgangsbohrung 424 in die Druckkammer 64 mündet und von denen die Durchgangsbohrungen 426 und 428 an Axialbohrungen 430 und 432 im Teil 40-1 der Eingangsnabe angeschlossen sind. Es sei darauf hingewiesen, dass in Umfangsrichtung mehrere Durchgangsbohrungen 424, mehrere Durchgangsbohrungen 426 und mehrere Durchgangsbohrungen 428 gegeneinander versetzt vorgesehen sein können, und dass dementsprechend in Umfangsrichtung mehrere Axialbohrungen 430 und mehrere Axialbohrungen 432 gegeneinander versetzt vorgesehen sein können. Die wenigstens eine Axialbohrung 430 mündet in die Druckkammer 66. Die wenigstens eine Axialbohrung 432 bildet mit wenigstens einer Radialbohrung 434 und wenigstens einer Radialbohrung 436 die Kühlölkanalanordnung 100, die mit ihren Bohrungen 434 und 436 in die Druckausgleichkammern 94 und 96 mündet.

Ein die Durchgangsbohrungen 424, 426 und 428 aufweisender radial innerer Abschnitt des Mitnehmers 310 bildet einen Rotorabschnitt 440 der Drehdurchführung. Zur Abdichtung der Ringkanäle 418, 420 und 422 und der Durchgangsbohrungen 424, 426 und 428 sind ringförmige Dichtungen 444, 446, 448, 450 und 452 in eine jeweilige Ringausnehmung des Statorabschnitts 402 eingesetzt, wobei die Dichtungen 444 und 446 den Ringkanal 418, die Dichtungen 448 und 450 den Ringkanal 420 und die Dichtungen 450 und 452 den Ringkanal 422 radial eingabeln. Die Dichtungen sind durch Federelemente gegen den Rotorabschnitt 440 des Mitnehmers 310 gepresst, so dass eine Gleitringdichtung gebildet ist.

Gemäß Vorstehendem ist der hydraulische Nehmerzylinder 56 über die wenigstens eine Durchgangsbohrung 424, den Ringkanal 418, die Bohrung 406 und die Leitung 412 an der zugeordneten Hydraulikdruckquelle angeschlossen oder anschließbar, ist der hydraulische Nehmerzylinder 58 über die wenigstens eine Axialbohrung 430, die wenigstens eine Durchgangsbohrung 426, den Ringkanal 420, die Bohrung 408 und die Leitung 414 an der zugeordneten Hydraulikdruckquelle angeschlossen und sind die Druckausgleichskammern 94 und 96 über die Bohrungen 434 und 436, die wenigstens eine Axialbohrung 432, die wenigstens eine Durchgangsbohrung 428, den Ringkanal 422, die Bohrung 410 und die Leitung 416 an der zugeordneten Kühlölquelle angeschlossen.

Bei der beschriebenen Ausführungsform wird der Statorabschnitt 402 an den Rotorabschnitt 440 vermittels des Deckels 130 axial angepresst, und zwar unter der Wirkung der Ringfeder 134. Anstelle gegenüber dem Deckel 130 gesondert verlaufenden Leitungen könnte man die Leitungen auch am Deckel festlegen oder einen Deckel verwenden, der darin integral ausgeführte Leitungen aufweist. Beispielsweise könnte man den Deckel als Druckgussteil ausführen. In diesem Falle könnte auch der Statorabschnitt 402 im Deckel integriert sein.

Weitere Einzelheiten, die Bedeutung und Funktion einzelner Komopnenten des Ausführungsbeispiels usw. sind dem Fachmann aus Fig. 1 und Fig. 2 ohne Weiteres verständlich. So bezeichnet 162 einen am Außenlamellenträger 32 angebrachten Halte- oder Sicherungsring, der die Außenlamellen am Lamellenhalteabschnitt sichert und die axialen Betätigungskräfte beim Einrücken der betreffenden Kupplungsanordnung aufnimmt. Eine Einbiegung 163 des Außenlamellenträgers 28 stützt in entsprechender Weise das Lamellenpaket 22 bei der Betätigung der Kupplungsanordnung 20 axial ab. Beim gezeigten Beispiel sind die Außenlamellen vergleichsweise massiv als reibbelaglose Lamellen ausgeführt, und die Innenlamellen sind als Belaglamellen ausgeführt. Zur vorteilhaften Ausgestaltungen der Lamellenpakete wird beispielsweise auf die DE 100 04 179 A1 verwiesen, die dem Fachmann auch weitere, das Verständnis der Konstruktion gemäß Fig. 1 erleichternde Hintergrundinformationen gibt.

Die Doppelkupplung 10 kann beispielsweise wie folgt aus Einzelteilen zusammengebaut und in einem Kraftfahrzeug-Antriebsstrang montiert werden. Zuerst wird der lnnenlamellenträger 30 der radial äußeren Kupplungsanordnung in den Außenlamellenträger 28 dieser Kupplungsanordnung eingelegt. Anschließend wird das Lamellenpaket 22 axial eingeschoben und der Sicherungsring 362 montiert. Anschließend wird der Außenlamellenträger 32 der radial inneren Kupplungsanordnung eingelegt, an dem der Sicherungsring 162 schon angebracht sein kann. Es wird dann das Lamellenpaket 26 eingeschoben, bevor oder nachdem der Innenlamellenträger 34 der radial inneren Kupplung eingelegt wird bzw. worden ist.

Unabhängig hiervon wird der Mitnehmer mit der Eingangsnabe 40 verbunden, beispielsweise durch Schweißen. Es kann dann der Kolben 60 eingelegt und es können die Rückstellfedem 90 eingelegt werden, worauf die Wandung 98 an der Eingangsnabe 40 angeschweißt wird. Daraufhin können der Betätigungskolben 62 und die Rückstellfedem 92 eingelegt und die Wandung 99 an der Eingangsnabe angeschweißt werden.

Zuletzt wird der die Eingangsnabe 40 und den Mitnehmer 310 umfassende Zusammenbau mit dem Mitnehmer in den Außenlamellenträger 28 der radial äußeren Kupplungsanordnung eingeschoben, wobei zuvor der Abstandsring 360 zu montieren ist. Der Mitnehmer 310 wird dann durch den Sicherungsring 312 am Außenlamellenträger 28 gesichert. Die damit im Wesentlichen fertig zusammengebaute Doppelkupplung kann dann als Modul auf die Getriebeeingangswellen 16 und 18 und die Pumpenantriebswelle 80 aufgeschoben und damit am Getriebe montiert werden. Als letztes werden die Leitungsanordnung 400 angeordnet und der Deckel 130 in die Gehäuseglocke eingesetzt und unter Vorspannung gegen den Mitnehmer 310 gepresst, so dass der Statorabschnitt 402 am Rotorabschnitt 440 unter Vorspannung anliegt. Diese Vorspannung des Deckels in Richtung zum Getriebe wird durch die Federanordnung, ggf. Tellerfeder 134, erreicht, die einerseits einen Toleranzausgleich erreicht und andererseits in Verbindung mit den den Dichtungen 444, 446, 448, 450 und 452 zugeordneten Federelementen zur Dichtheit der Drehdurchführung 402, 440 sorgt.

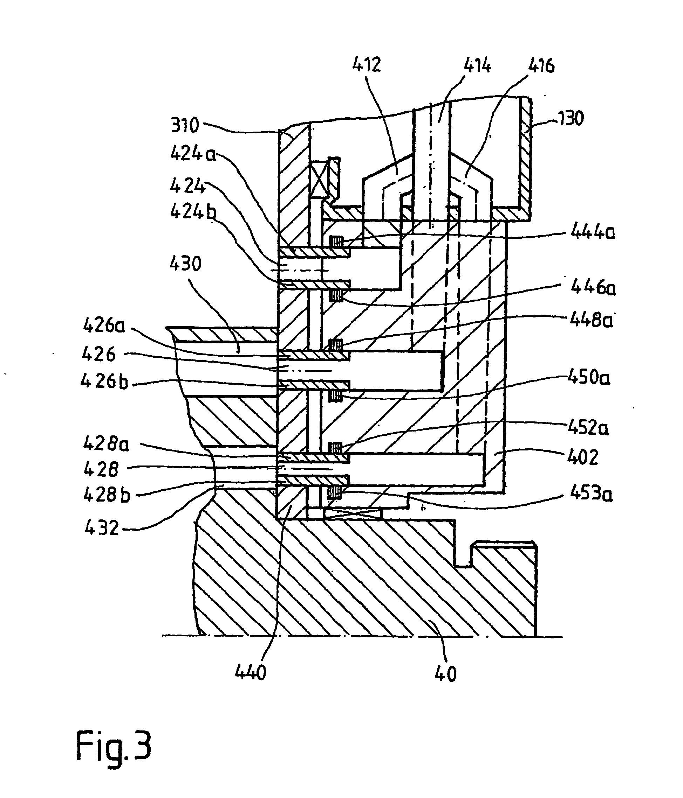

Fig. 3 zeigt eine Ausführungsvariante für die Drehdurchführung des Ausführungsbeispiels der Fig. 1. Anstelle der axial wirkenden Dichtungen 444, 446, 448, 450 und 452 sind radial wirkende Dichtringe 444a, 446a, 448a, 450a, 452a und 453a vorgesehen, die zwischen dem Statorabschnitt 402 und Ringblechen 424a, 424b, 426a, 426b, 428a, 428b wirksam sind, die am Mitnehmer 310 festgelegt und paarweise den Durchgangsbohrungen 424, 426 und 428 zugeordnet sind. Die Ringbleche sind vorzugsweise am Mitnehmer 310 angeschweißt und greifen mit einem jeweiligen Abschnitt in die Durchgangsbohrungen ein, wie in Fig. 3 gezeigt ist.

Fig. 4 zeigt ein weiteres Ausführungsbeispiel für eine erfindungsgemäße Doppelkupplung. Es werden nur die Unterschiede gegenüber dem Ausführungsbeispiel der Fig. 1 und 2 erläutert, wobei darauf hingewiesen wird, dass für analoge oder entsprechende Komponenten die gleichen Bezugszeichen verwendet sind.

Beim Ausführungsbeispiel der Fig. 4 ist der Deckel 130 als Druckgussteil ausgeführt, in dem die Leistungsanordnung 400 integriert ist. Mit dem Deckel ist ferner ein hülsenartiger Statorabschnitt 402 einstückig ausgeführt, der sich in axialer Richtung erstreckt und in eine zugeordete Aufnahme 500 der Eingangsnabe 40 eingreift. Zwischen dem Statorabschnitt 402 und der Eingangsnabe 40 sind in dem Aufnahmeraum 500 angeordnete Radiallager 502 und 504 sowie ein Dichtungsring 506 und Dichtringe 520, 522, 524, 526 wirksam. In Richtung zur Antriebseinheit stützt sich die Doppelkupplung unter Vermittlung des Mitnehmers 310 über ein Axiallager 158 am Deckel 130 ab, der sich seinerseits am Sicherungsring 136 abstützt.

Die Eingangsnabe 40 weist in einem die Aufnahme 500 nach radial außen begrenzenden Wandungsabschnitt Bohrungen 506, 508, 510 und 512 auf, die in den Fliehkraftdruckausgleichraum 96, in die Druckkammer 66, in den Fliehkraftdruckausgleichraum 94 bzw. in die Druckkammer 64 münden. Der Rotorabschnitt 402 weist entsprechende Bohrungen oder Öffnungen auf, über die die Bohrungen 406, 408, 410 und 412 und damit die Druckausgleichskammem 96 und 94 bzw. die Druckkammern 66 und 64 an der jeweils zugeordneten Leitung der Leitungsanordnung 400 angeschlossen sind. Zwischen der die Bohrungen 506, 508, 510 und 512 aufweisenden Wandung und dem Statorabschnitt 402 sind die schon erwähnten Dichtungsringe 520, 522, 524, 526 wirksam, die das Kühlöl und das Hydraulikdruckmedium voneinander trennen und in Verbindung mit dem Dichtungsring 506 für eine Abdichtung der beim Ausführungsbeispiel realisierten radialen Drehdurchführung (im Gegensatz zu einer axialen Drehdurchführung bei den Ausführungsbeispielen der Fig. 1 bis 3) nach außen sorgen. Als Rotorabschnitt 440 der Drehdurchführung kann der die Aufnahme 500 aufweisende Abschnitt der Eingangsnabe 40 aufgefasst werden.

Der Zusammenbau der Doppelkupplung 10 gemäß Fig. 4 kann in gleicher Weise wie beim Ausführungsbeispiel der Fig. 1 und 2 erfolgen. Der Gehäusedeckel 130, der die Leitungsanordnung 400 und den Rotorabschnitt 402 aufweist, wird als letztes eingebaut und hierbei mit dem Rotorabschnitt 402 in die Aufnahme 500 axial eingeschoben. Als letztes wird der Sicherungsring 136 montiert, wobei ggf. ähnlich wie bei Fig. 1 eine Federanordnung zwischen dem Sicherungsring und dem Deckel 130 vorgesehen sein kann, die den Deckel in Richtung zum Getriebe vorspannt, so dass ein Toleranzausgleich erreicht wird und Axialbewegungen aufgenommen werden. Eine andere Möglichkeit, Toleranzen und/oder Axialbewegungen auszugleichen, ist das Vorsehen einer entsprechenden Federanordnung zwischen dem Mitnehmer 310 und dem Deckel 130 im Bereich des Axiallagers 158, das beispielsweise mit einem entsprechenden Federelement gekoppelt sein könnte.

## Patentansprüche

1. Kupplungssystem, umfassend:
- eine Mehrfach-Kupplungseinrichtung, ggf. Doppel-Kupplungseinrichtung (10), für die Anordnung in einem Antriebsstrang eines Kraftfahrzeugs zwischen einer Antriebseinheit und einem Getriebe,
wobei die Kupplungseinrichtung eine einer ersten Getriebeeingangswelle (16) zugeordnete erste Kupplungsanordnung (20) und eine einer zweiten Getriebeeingangswelle (18) zugeordnete zweite Kupplungsanordnung (24) aufweist,
wobei von den beiden Getriebeeingangswellen die eine (18) sich durch die andere (16) erstreckt,
wobei eine Eingangsseite der Kupplungseinrichtung eine an einer Abtriebswelle der Antriebseinheit direkt oder indirekt angekoppelte oder ankoppelbare Eingangsnabe (40) oder Eingangswelle (im Folgenden nur als Eingangsnabe bezeichnet) aufweist, die mit einer Eingangsseite (48) der ersten Kupplungsanordnung und einer Eingangsseite (50) der zweiten Kupplungsanordnung in Drehmitnahmeverbindung steht, und
wobei die Kupplungsanordnungen (20, 24) jeweils mit einem integrierten, sich im Betrieb mitdrehenden hydraulischen Nehmerzylinder (56 bzw. 58) ausgeführt sind, über den die jeweilige Kupplungsanordnung auf hydraulischem Wege betätigbar ist;
- ein Hydrauliksystem zur Betätigung der Kupplungsanordnungen auf hydraulischem Wege unter Vermittlung der hydraulischen Nehmerzylinder (56, 58), welches wenigstens eine Hydraulikdruckquellenanordnung und eine die hydraulischen Nehmerzylinder (56, 58) mit der Hydraulikdruckquellenanordnung verbindende Hydraulikleitungsanordnung (412, 414) umfasst;
wobei in der Eingangsnabe (40) oder/und wenigstens einer weiteren, mit der Eingangsnabe zur Drehmitnahme, vorzugsweise drehfest verbundenen Komponente (310) der Kupplungseinrichtung wenigstens ein Hydraulikkanal (430) oder Hydraulikdurchgang (424, 426) ausgebildet ist, wobei wenigstens einer der Nehmerzylinder (56, 58) über den wenigstens einen Hydraulikkanal (430) bzw. Hydraulikdurchgang (424, 426) sowie über die Hydraulikleitungsanordnung (412, 414) an der Hydraulikdruckquellenanordnung angeschlossen oder anschließbar ist,
wobei der Hydraulikkanal bzw. Hydraufikdurchgang einer Drehdurchführung (402, 440) zugehörig oder daran angeschlossen oder anschließbar ist, und
wobei die Hydraulikleitungsanordnung wenigstens eine von radial außen oder/und von der Antriebseinheit her in Richtung zur Eingangsnabe bzw. der Komponente geführte oder führbare Hydraulikleitung (412, 414) aufweist, über die die Drehdurchführung (402, 440) an der Hydraulikdruckquellenanordnung angeschlossen oder anschließbar ist,
**dadurch gekennzeichnet,**
**dass** die Kupplungsanordnungen (20, 24) für ein Laufen unter Einwirkung eines Betriebsmediums vorgesehen, insbesondere als nasslaufende Lamellen-Kupplungsanordnungen (20, 24) ausgeführt sind, und dass ein Betriebsmedium-Versorgungssystem zur Versorgung der Kupplungsanordnungen mit Betriebsmedium vorgesehen ist, welches wenigstens eine Betriebsmediumquellenanordnung und eine Betriebsmediumleitungsanordnung (416) umfasst, über die den Kupplungsanordnungen (20, 24) Betriebsmedium zuführbar ist und
**dass** in der Eingangsnabe (40) oder/und wenigstens einer weiteren, mit der Eingangsnabe zur Drehmitnahme, vorzugsweise drehfest verbundenen Komponente (310) der Kupplungseinrichtung wenigstens ein Betriebsmediumkanal (100) oder Betriebsmediumdurchgang (428) ausgebildet ist, und
**dass** wenigstens einer der Kupplungsanordnungen (20, 24) über den wenigstens einen Betriebsmediumkanal (100) bzw. Betriebsmediumdurchgang (428) sowie über die Betriebsmediumleitungsanordnung (416) Betriebsmedium von der Betriebsmediumquellenanordnung zuführbar ist,
wobei der Betriebsmediumkanal (100) bzw. Betriebsmediumdurchgang (428) einer Drehdurchführung (402, 440) zugehörig oder daran angeschlossen oder anschließbar ist.

2. Kupplungssystem nach Anspruch 1,
**dadurch gekennzeichnet, dass** die Betriebsmediumleitungsanordnung wenigstens eine von radial außen oder/und von der Antriebseinheit her in Richtung zur Eingangsnabe bzw. der Komponente geführte oder führbare Betriebsmediumleitung (416) aufweist, über die der Drehdurchführung (402, 440) Betriebsmedium von der Betriebsmediumquellenanordnung zuführbar ist.

3. Kupplungssystem nach Anspruch 1 oder 2,
**dadurch gekennzeichnet, dass** eine integral ausgeführte Leitungsanordnung (400) vorgesehen ist, die von radial außen oder/und von der Antriebseinheit her in Richtung zur Eingangsnabe bzw. der Komponente geführt oder führbar ist und die wenigstens eine Hydraulikleitung (414, 414) und die wenigstens eine Betriebsmediumleitung (416) aufweist.

4. Kupplungssystem nach einem der vorherigen Ansprüche,
**dadurch gekennzeichnet, dass** eine integral ausgeführte Drehdurchführung (402, 440) vorgesehen ist, die wenigstens einen an der Hydraulikleitungsanordnung (412, 414) angeschlossenen Hydraulikabschnitt und wenigstens einen an der Betriebsmediumleitungsanordnung (416) angeschlossenen Betriebsmediumabschnitt aufweist.

5. Kupplungssystem nach einem der Ansprüche 1 bis 4,
**dadurch gekennzeichnet, dass** die Drehdurchführung bzw. der Hydraulikabschnitt oder/und der Betriebsmediumabschnitt als axiale Drehdurchführung ausgeführt ist (Fig. 1, 2, 3).

6. Kupplungssystem nach einem der Ansprüche 1 bis 5,
**dadurch gekennzeichnet, dass** die Drehdurchführung bzw. der Hydraulikabschnitt oder/und der Betriebsmediumabschnitt als radiale Drehdurchführung ausgeführt ist (Fig. 4).

7. Kupplungssystem nach einem der Ansprüche 1 bis 6,
**dadurch gekennzeichnet, dass** die Drehdurchführung einen im Betrieb im wesentlichen stationären Statorabschnitt (402) und einen im Betrieb rotierenden Rotorabschnitt (440) aufweist, wobei der Rotorabschnitt von der Eingangsnabe selbst oder/und der mit der Eingangsnabe zur Drehmitnahme verbundenen, vorzugsweise in einem Momentenübertragungsweg zwischen einer die Eingangsnabe (40) umfassenden Eingangsseite der Kupplungseinrichtung und wenigstens einer Ausgangsseite der Kupplungseinrichtung liegenden Komponente (310) der Kupplungseinrichtung gebildet ist.

8. Kupplungssystem nach einem der Ansprüche 1 bis 7,
**dadurch gekennzeichnet, dass** die Kupplungseinrichtung in einen von einer Getriebegehäuseglocke (14) begrenzten Aufnahmeraum (12) aufgenommen ist, der durch eine ggf. deckelartige Wandung (130) in Richtung zur Antriebseinheit geschlossen ist und eine Öffnung zur Ankoppelung der Eingangsnabe (40) an einer Abtriebswelle der Antriebseinheit, ggf. über eine Torsionsschwingungsdämpferanordnung, aufweist, und dass die wenigstens eine Hydraulikleitung (400) oder/und die wenigstens eine Betriebsmediumleitung (400) zumindest bereichsweise an der Wandung festgelegt oder in die Wandung (130) integriert ist oder/und dass der Statorabschnitt (402) der Drehdurchführung an der Wandung (130) gehalten oder in diese integriert ist.

9. Kupplungssystem nach einem der Ansprüche 1 bis 8,
**dadurch gekennzeichnet, dass** der Statorabschnitt (402) der Drehdurchführung über wenigstens ein Radiallager (152) oder/und wenigstens eine Axiallager an der Eingangsnabe (40) oder/und der mit der Eingangsnabe zur Drehmitnahme verbundenen Komponente relatiwerdrehbar gelagert ist oder/und dass der Statorabschnitt (402) in einer zugeordneten Aufnahme (500) eines den Rotorabschnitt (440) bildenden Bereichs der Eingangsnabe (40) aufgenommen ist.

10. Kupplungssystem nach einem der Ansprüche 1 bis 9,
**dadurch gekennzeichnet, dass** die wenigstens eine Hydraulikleitung (412, 414) oder/und die wenigstens eine Betriebsmediumleitung (416) in einem Axialbereich zwischen der Kupplungseinrichtung (10) und der Antriebseinheit, ggf. in einem Axialbereich zwischen den Kupplungseinrichtung und einer die Kupplungseinrichtung mit der Antriebseinheit verbindenden Torsionsschwingungsdämpferanordnung, von radial außen zur Drehdurchführung (402, 440) geführt oder führbar ist.

11. Kupplungssystem nach einem der Ansprüche 1 bis 10,
**dadurch gekennzeichnet, dass** die wenigstens eine Hydraulikleitung (412, 414) oder/und die wenigstens eine Betriebsmediumleitung (416) mit der Drehdurchführung oder/und mit einer getriebegehäuseseitigen oder antriebseinheitsseitigen Anschlussstelle (404) mittels einer Steckverbindung (404) verbunden oder verbindbar ist.

12. Kupplungssystem nach Anspruch 1,
**dadurch gekennzeichnet, dass** die Kupplungsanordnungen (20, 24) als Lamellen-Kupplungsanordnungen ausgebildet sind, wobei von einem ersten Lamellenpaket (22) der ersten Kupplungsanordnung und einem zweiten Lamellenpaket (26) der zweiten Kupplungsanordnung das eine (22) das andere (26) zumindest in einem axialen Überlappungsbereich radial außen umgibt,
wobei die Eingangsnabe (40) mit einem Außenlamellenträger (28) der ersten Kupplungsanordnung und einem Außenlamellenträger (32) der zweiten Kupplungsanordnung in Drehmitnahmeverbindung steht,
wobei die Außenlamellenträger jeweils einen sich bezogen auf eine Drehachse der Kupplungseinrichtung im Wesentlichen axial erstreckenden, als Eingangsseite der jeweiligen Kupplungsanordnung dienenden Lamellenhalteabschnitt (48 bzw. 50) und einen sich von diesem in radialer Richtung anschließenden, mit dem Lamellenhalteabschnitt einstückigen oder daran fest angebrachten Trägerabschnitt (44 bzw. 46) aufinreisen, und
wobei ein jeweiliger Innenlamellenträger (30 bzw. 34) der ersten und zweiten Kupplungsanordnung, der als Ausgangsseite der betreffenden Kupplungsanordnung dient, mit der ersten bzw. zweiten Getriebeeingangswelle in Drehmitnahmeverbindung steht oder bringbar ist,
wobei der Trägerabschnitt (46) des zum radial inneren Lamellenpaket (26) zugehörigen Außenlamellenträgers (32) am Lamellenhalteabschnitt (48) des zum radial äußeren Lamellenpaket zugehörigen Außenlamellenträgers (28) gehalten ist und sich von diesem nach radial innen erstreckt.

13. Kupplungssystem nach Anspruch 12,
**dadurch gekennzeichnet, dass** die Kupplungsanordnungen jeweils mit einem integrierten, sich im Betrieb mitdrehenden hydraulischen Nehmerzylinder (56, 58) ausgeführt sind, über den die jeweilige Kupplungsanordnung auf hydraulischem Wege betätigbar ist, dass ein Nehmerzylinderraum (64) des zur Betätigung des radial äußeren Lamellenpakets (22) dienenden Nehmerzylinders (56) zwischen einem die Eingangsnabe (40) mit dem Lamellenhalteabschnitt (48) des diesem Lamellenpakets zugehörigen Außenlamellenträgers (28) koppelnden Mitnehmer (310) und einem Betätigungskolben (60) des Nehmerzylinders ausgebildet ist und dass der Betätigungskolben sich in wesentlichen in axialer Richtung erstreckende Betätigungsabschnitte aufinreist, denen Aussparungen im Trägerabschnitt (46) des zum radial inneren Lamellenpaket (24) zugehörigen Außenlamellenträgers (32) zugeordnet sind, um durch die Aussparungen auf das radial äußere Lamellenpaket (22) wirken zu können.

14. Kupplungssystem nach Anspruch 13,
**dadurch gekennzeichnet, dass** ein Nehmerzylinderraum (66) des zur Betätigung des radial inneren Lamellenpakets (26) dienenden Nehmerzylinders (58) zwischen einer Wandung (98) und einem Betätigungskolben (62) des Nehmerzylinders ausgebildet ist, wobei die Wandung (98) einen Fliehkraftdruckausgleichsraum begrenzt, der dem Betätigungskolben (60) der Kupplungsanordnung (20) mit dem radial äußeren Lamellenpaket (22) zugeordnet ist.

15. Kraftfahrzeug-Antriebsstrang, umfassend eine vorzugsweise als Verbrennungsmotor ausgeführte Antriebseinheit, ein Getriebe, insbesondere Lastschaltgetriebe, und ein Kupplungssystem nach einem der vorhergehenden Ansprüche.

## Claims

1. Clutch system, comprising
- a multiple clutch device, optionally a dual clutch device (10), for arrangement in a drive train of a vehicle between a drive unit and a transmission,
the clutch device having a first clutch arrangement (20) which is assigned to a first transmission input shaft (16) and a second clutch arrangement (24) which is assigned to a second transmission input shaft (18),
one (18) of the two transmission input shafts extending through the other (16),
an input side of the clutch device having an inlet hub (40) or input shaft (referred to in the following text only as an inlet hub) which has a rotary driving connection to an input side (48) of the first clutch arrangement and to an input side (50) of the second clutch arrangement and which is or can be coupled directly or indirectly to an output shaft of the drive unit, and
the clutch arrangements (20, 24) being configured in each case with an integrated hydraulic slave cylinder (56 or 58) which corotates in operation and via which the respective clutch arrangement can be actuated hydraulically;
- a hydraulic system for actuating the clutch arrangements hydraulically via the hydraulic slave cylinders (56, 58), the said hydraulic system comprising at least one hydraulic pressure source arrangement and one hydraulic line arrangement (412, 414) which connects the hydraulic slave cylinders (56, 58) to the hydraulic pressure source arrangement;
at least one hydraulic channel (430) or hydraulic passage (424, 426) being formed in the inlet hub (40) and/or at least one further component (310) of the clutch device which is connected to the inlet hub for rotary driving, preferably fixedly in terms of rotation, at least one of the slave cylinders (56, 58) being connected to the hydraulic pressure source arrangement, or it being possible to connect it to the latter, via the at least one hydraulic channel (430) or hydraulic passage (424, 426) and via the hydraulic line arrangement (412, 414), the hydraulic channel or hydraulic passage being connected, or it being possible to connect it, to a rotary leadthrough (402, 440) or in a manner which is assigned to the latter, and
the hydraulic line arrangement having at least one hydraulic line (412, 414) which is routed or can be routed from the radial outside and/or from the drive unit in the direction of the inlet hub or the component, and via which the rotary leadthrough (402, 440) is connected or can be connected to the hydraulic pressure source arrangement,
**characterized**
**in that** the clutch arrangements (20, 24) are provided for running under the action of an operating medium, in particular are configured as wet-running multiple disc clutch arrangements (20, 24), and in that an operating-medium supply system is provided for supplying the clutch arrangements with operating medium, which operating-medium supply system comprises at least one operating-medium source arrangement and one operating-medium line arrangement (416) via which operating medium can be fed to the clutch arrangements (20, 24), and
**in that** at least one operating-medium channel (100) or operating-medium passage (428) is formed in the inlet hub (40) and/or at least one further component (310) of the clutch device which is connected to the inlet hub for rotary driving, preferably fixedly in terms of rotation, and
**in that** operating medium can be fed from the operating-medium source arrangement to at least one of the clutch arrangements (20, 24) via the at least one operating-medium channel (100) or operating-medium passage (428) and via the operating-medium line arrangement (416), the operating-medium channel (100) or operating-medium passage (428) being connected, or it being possible to connect it, to a rotary leadthrough (402, 440) or in a manner which is assigned to the latter.

2. Clutch system according to Claim 1, **characterized in that** the operating-medium line arrangement has at least one operating-medium line (416) which is routed or can be routed from the radial outside and/or from the drive unit in the direction of the inlet hub or the component, and via which operating medium can be fed from the operating-medium source arrangement to the rotary leadthrough (402, 440).

3. Clutch system according to Claim 1 or 2, **characterized in that** an integrally configured line arrangement (400) is provided which is routed or can be routed from the radial outside and/or from the drive unit in the direction of the inlet hub or the component, and which has at least one hydraulic line (412, 414) and which has at least one operating-medium line (416).

4. Clutch system according to one of the preceding claims, **characterized in that** an integrally configured rotary leadthrough (402, 440) is provided which has at least one hydraulic section which is connected to the hydraulic line arrangement (412, 414) and at least one operating-medium section which is connected to the operating-medium line arrangement (416).

5. Clutch system according to one of Claims 1 to 4, **characterized in that** the rotary leadthrough or the hydraulic section and/or the operating-medium section are/is configured as an axial rotary leadthrough (Figs 1, 2, 3).

6. Clutch system according to one of Claims 1 to 5, **characterized in that** the rotary leadthrough or the hydraulic section and/or the operating-medium section are/is configured as a radial rotary leadthrough (Figure 4).

7. Clutch system according to one of Claims 1 to 6, **characterized in that** the rotary leadthrough has a stator section (402) which is substantially stationary during operation and a rotor section (440) which rotates during operation, the rotor section being formed by the inlet hub itself and/or that component (310) of the clutch device which is connected to the inlet hub for rotary driving and preferably lies in a moment-transmitting path between an input side of the clutch device which comprises the inlet hub (40) and at least one output side of the clutch device.

8. Clutch system according to one of Claims 1 to 7, **characterized in that** the clutch device is accommodated in a receptacle space (12) which is bounded by a transmission housing bell (14), is closed in the direction of the drive unit by an optionally cover-like wall (130) and has an opening for coupling the input hub (40) to an output shaft of the drive unit, optionally via a torsional-vibration damper arrangement, and **in that** the at least one hydraulic line (400) and/or the at least one operating-medium line (400) is fixed to the wall at least in regions or is integrated into the wall (130), and/or **in that** the stator section (402) of the rotary leadthrough is held on the wall (130) or is integrated into the latter.

9. Clutch system according to one of Claims 1 to 8, **characterized in that** the stator section (402) of the rotary leadthrough is mounted so as to be relatively rotatable on the inlet hub (40) and/or the component which is connected to the inlet hub for rotary driving via at least one radial bearing (152) and/or at least one axial bearing, and/or **in that** the stator section (402) is accommodated in an associated receptacle (500) of a region of the inlet hub (40) which forms the rotor section (440).

10. Clutch system according to one of Claims 1 to 9, **characterized in that** the at least one hydraulic line (412, 414) and/or the at least one operating-medium line (416) are/is routed or can be routed from the radial outside to the rotary leadthrough (402, 440) in an axial region between the clutch device (10) and the drive unit, optionally in an axial region between the clutch device and a torsional-vibration damper arrangement which connects the clutch device to the drive unit.

11. Clutch system according to one of Claims 1 to 10, **characterized in that** the at least one hydraulic line (412, 414) and/or the at least one operating-medium line (416) are/is connected or can be connected by means of a plug-in connection (404) to the rotary leadthrough and/or to a connecting point (404) on the transmission housing or drive unit.

12. Clutch system according to Claim 1, **characterized in that** the clutch arrangements (20, 24) are configured as multiple disc clutch arrangements,
a first multiple disc assembly (22) of the first clutch arrangement surrounding a second multiple disc assembly (26) of the second clutch arrangement radially on the outside at least in an axial overlap region,
the inlet hub (40) having a rotary driving connection to an outer disc carrier (28) of the first clutch arrangement and to an outer disc carrier (32) of the second clutch arrangement,
the outer disc carriers in each case having a disc holding section (48 or 50) which extends substantially axially in relation to a rotational axis of the clutch device and serves as an input side of the respective clutch arrangement, and a carrier section (44 or 46) which adjoins the former in a radial direction, is of one piece with the disc holding section or is attached fixedly to it, and
a respective inner disc carrier (30 or 34) of the first and second clutch arrangements which serves as an output side of the relevant clutch arrangement being connected, or it being possible to connect it, for rotary driving to the first or second transmission input shaft,
the carrier section (46) of the outer disc carrier (32) which belongs to the radially inner multiple disc assembly (26) being held on the disc holding section (48) of the outer disc carrier (28) which belongs to the radially outer multiple disc assembly and extending radially inwards from the latter.

13. Clutch system according to Claim 12, **characterized in that** the clutch arrangements are configured in each case with an integrated hydraulic slave cylinder (56, 58) which corotates in operation and via which the respective clutch arrangement can be actuated hydraulically, **in that** a slave-cylinder space (64) of the slave cylinder (56) which serves to actuate the radially outer multiple disc assembly (22) is formed between a driver (310), which couples the inlet hub (40) to the disc holding section (48) of the outer disc carrier (28) which belongs to the said multiple disc assembly, and an actuating piston (60) of the slave cylinder, and **in that** the actuating piston has actuating sections which extend substantially in the axial direction and are assigned cut-outs in the carrier section (46) of the outer disc carrier (32) which belongs to the radially inner multiple disc assembly (26), in order to be able to act on the radially outer multiple disc assembly (22) through the cut-outs.

14. Clutch system according to Claim 13, **characterized in that** a slave-cylinder space (66) of the slave cylinder (58) which serves to actuate the radially inner multiple disc assembly (26) is formed between a wall (98) and an actuating piston (62) of the slave cylinder, the wall (98) bounding a centrifugal force compensation space which is assigned to the actuating piston (60) of the clutch arrangement (20) with the radially outer multiple disc assembly (22).

15. Motor-vehicle drive train, comprising a drive unit which is preferably configured as an internal combustion engine, a transmission, in particular a power gearbox, and a clutch system according to one of the preceding claims.

## Revendications

1. Système d'embrayage, comprenant :
- un dispositif d'embrayage multiple, le cas échéant un dispositif d'embrayage double (10), à disposer dans une ligne d'entraînement d'un véhicule automobile entre une unité d'entraînement et une boîte de vitesses,
sachant que le dispositif d'embrayage présente un premier ensemble d'embrayage (20) associé à un premier arbre d'entrée de boîte (16) et un deuxième ensemble d'embrayage (24) associé à un deuxième arbre d'entrée de boîte (18),
sachant que l'un (18) des deux arbres d'entrée de boîte s'étend à travers l'autre (16),
sachant qu'un côté d'entrée du dispositif d'embrayage présente un moyeu d'entrée (40) ou arbre d'entrée (désigné dans la suite uniquement « moyeu d'entrée ») couplé ou pouvant être couplé directement ou indirectement à un arbre de sortie de l'unité d'entraînement, moyeu qui se trouve en liaison d'entraînement en rotation avec un côté d'entrée (48) du premier ensemble d'embrayage et avec un côté d'entrée (50) du deuxième ensemble d'embrayage,
et sachant que les ensembles d'embrayage (20, 24) sont respectivement réalisés avec un cylindre hydraulique récepteur intégré (56, 58), conjointement rotatif en service, par l'intermédiaire duquel l'ensemble d'embrayage respectif peut être actionné par voie hydraulique ;
- un système hydraulique pour actionner les ensembles d'embrayage par voie hydraulique par l'intermédiaire des cylindres hydrauliques récepteurs (56, 58), système qui comprend au moins un ensemble de source de pression hydraulique et un ensemble de conduite hydraulique (412, 414) reliant les cylindres hydrauliques récepteurs (56, 58) à l'ensemble de source de pression hydraulique ;
sachant qu'au moins un canal hydraulique (430) ou passage hydraulique (424, 426) est formé dans le moyeu d'entrée (40) et/ou dans au moins un autre élément (310) du dispositif d'embrayage qui est relié au moyeu d'entrée en rotation conjointe, de préférence en rotation solidaire, sachant qu'au moins un des cylindres récepteurs (56, 58) est ou peut être raccordé à l'ensemble de source de pression hydraulique par l'intermédiaire du canal hydraulique (430) ou passage hydraulique (424, 426) au moins unique ainsi que par l'intermédiaire de l'ensemble de conduite hydraulique (412, 414), sachant que le canal hydraulique ou passage hydraulique fait partie d'un passage tournant (402, 440) ou lui est ou peut lui être raccordé,
et sachant que l'ensemble de conduite hydraulique présente au moins une conduite hydraulique (412, 414) dirigée ou pouvant être dirigée radialement de l'extérieur et/ou depuis l'unité d'entraînement en direction du moyeu d'entrée ou dudit élément, conduite par l'intermédiaire de laquelle le passage tournant (402, 440) est ou peut être raccordé à l'ensemble de source de pression hydraulique,
**caractérisé en ce que** les ensembles d'embrayage (20, 24) sont prévus pour fonctionner sous l'action d'un fluide de service, notamment sont réalisés sous la forme d'ensembles d'embrayage (20, 24) à disques multiples à fonctionnement humide, et **en ce qu'**il est prévu un système d'alimentation en fluide de service pour alimenter les ensembles d'embrayage en fluide de service, système qui comprend au moins un ensemble de source de fluide de service et un ensemble de conduite de fluide de service (416) par l'intermédiaire duquel du fluide de service peut être apporté aux ensembles d'embrayage (20, 24),
et **en ce qu'**au moins un canal (100) de fluide de service ou passage (428) de fluide de service est formé dans le moyeu d'entrée (40) et/ou dans au moins un autre élément (310) du dispositif d'embrayage qui est relié au moyeu d'entrée en rotation conjointe, de préférence en rotation solidaire,
et **en ce que** du fluide de service peut être apporté depuis l'ensemble de source de fluide de service à au moins un des ensembles d'embrayage (20, 24) par l'intermédiaire du canal (100) de fluide de service ou passage (428) de fluide de service au moins unique ainsi que par l'intermédiaire de l'ensemble de conduite de fluide de service (416), sachant que le canal (100) de fluide de service ou passage (428) de fluide de service fait partie d'un passage tournant (402, 440) ou lui est ou peut lui être raccordé.

2. Système d'embrayage selon la revendication 1, **caractérisé en ce que** l'ensemble de conduite de fluide de service présente au moins une conduite (416) de fluide de service dirigée ou pouvant être dirigée radialement de l'extérieur et/ou depuis l'unité d'entraînement en direction du moyeu d'entrée ou dudit élément, conduite par l'intermédiaire de laquelle du fluide de service provenant de l'ensemble de source de fluide de service peut être apporté au passage tournant (402, 440).

3. Système d'embrayage selon la revendication 1 ou 2, **caractérisé en ce qu'**il est prévu un ensemble de conduite (400) en exécution intégrale, qui est dirigé ou peut être dirigé radialement de l'extérieur et/ou depuis l'unité d'entraînement en direction du moyeu d'entrée ou dudit élément, et qui présente la conduite hydraulique (412, 414) au moins unique et la conduite (416) de fluide de service au moins unique.

4. Système d'embrayage selon l'une quelconque des revendications précédentes, **caractérisé en ce qu'**il est prévu un passage tournant (402, 440) en exécution intégrale, qui présente au moins une partie hydraulique raccordée à l'ensemble de conduite hydraulique (412, 414) et au moins une partie de fluide de service raccordée à l'ensemble de conduite de fluide de service (416).

5. Système d'embrayage selon l'une quelconque des revendications 1 à 4, **caractérisé en ce que** le passage tournant ou la partie hydraulique et/ou la partie de fluide de service est réalisé sous forme de passage tournant axial (figures 1, 2, 3).

6. Système d'embrayage selon l'une quelconque des revendications 1 à 5, **caractérisé en ce que** le passage tournant ou la partie hydraulique et/ou la partie de fluide de service est réalisé sous forme de passage tournant radial (figure 4).

7. Système d'embrayage selon l'une quelconque des revendications 1 à 6, **caractérisé en ce que** le passage tournant présente une partie de stator (402) essentiellement stationnaire en service et une partie de rotor (440) rotative en service, sachant que la partie de rotor est formée par le moyeu d'entrée lui-même et/ou par l'élément (310) du dispositif d'embrayage qui est relié au moyeu d'entrée en rotation conjointe, élément qui se situe de préférence dans un chemin de transmission de couple entre un côté d'entrée, comprenant le moyeu d'entrée (40), du dispositif d'embrayage et au moins un côté de sortie du dispositif d'embrayage.

8. Système d'embrayage selon l'une quelconque des revendications 1 à 7, **caractérisé en ce que** le dispositif d'embrayage est reçu dans un espace récepteur (12) délimité par une cloche (14) de carter de boîte, espace qui est fermé en direction de l'unité d'entraînement par une paroi (130) le cas échéant du genre couvercle et qui présente une ouverture pour l'accouplement du moyeu d'entrée (40) à un arbre de sortie de l'unité d'entraînement, le cas échéant par l'intermédiaire d'un ensemble d'amortisseur de vibrations de torsion, et **en ce que** la conduite hydraulique (400) au moins unique et/ou la conduite (400) de fluide de service au moins unique est fixée au moins sectoriellement sur la paroi ou est intégrée dans la paroi (130), et/ou **en ce que** la partie de stator (402) du passage tournant est maintenue sur la paroi (130) ou est intégrée dans cette dernière.

9. Système d'embrayage selon l'une quelconque des revendications 1 à 8, **caractérisé en ce que** la partie de stator (402) du passage tournant est montée à rotation relative sur le moyeu d'entrée (40), et/ou sur l'élément relié au moyeu d'entrée en rotation conjointe, par l'intermédiaire d'au moins un palier radial (152) et/ou d'au moins un palier axial, et/ou **en ce que** la partie de stator (402) est reçue dans un logement associé (500) d'une région du moyeu d'entrée (40) qui forme la partie de rotor (440).

10. Système d'embrayage selon l'une quelconque des revendications 1 à 9, **caractérisé en ce que** la conduite hydraulique (412, 414) au moins unique et/ou la conduite (416) de fluide de service au moins unique est ou peut être dirigée radialement de l'extérieur vers le passage tournant (402, 440) dans une région axiale entre le dispositif d'embrayage (10) et l'unité d'entraînement, le cas échéant dans une région axiale entre le dispositif d'embrayage et un ensemble d'amortisseur de vibrations de torsion reliant le dispositif d'embrayage à l'unité d'entraînement.

11. Système d'embrayage selon l'une quelconque des revendications 1 à 10, **caractérisé en ce que** la conduite hydraulique (412, 414) au moins unique et/ou la conduite (416) de fluide de service au moins unique est ou peut être reliée au moyen d'un assemblage par emboîtement (404) au passage tournant et/ou à un point de raccordement (404) côté carter de boîte ou côté unité d'entraînement.

12. Système d'embrayage selon la revendication 1, **caractérisé en ce que** les ensembles d'embrayage (20, 24) sont réalisés sous la forme d'ensembles d'embrayage à disques multiples,
sachant que, parmi un premier groupe de disques (22) du premier ensemble d'embrayage et un deuxième groupe de disques (26) du deuxième ensemble d'embrayage, l'un (22) entoure l'autre (26) radialement à l'extérieur au moins dans une région axiale de chevauchement,
sachant que le moyeu d'entrée (40) se trouve en liaison d'entraînement en rotation avec un porte-disques extérieur (28) du premier ensemble d'embrayage et avec un porte-disques extérieur (32) du deuxième ensemble d'embrayage,
sachant que les porte-disques extérieurs présentent respectivement une partie (48, 50) de maintien de disques s'étendant essentiellement axialement par rapport à un axe de rotation du dispositif d'embrayage et servant de côté d'entrée de l'ensemble d'embrayage respectif, et une partie porteuse (44, 46) se raccordant à la précédente en direction radiale et réalisée d'un seul tenant avec la partie de maintien de disques ou installée fixement sur cette dernière,
et sachant qu'un porte-disques intérieur respectif (30, 34) du premier et du deuxième ensemble d'embrayage, qui sert de côté de sortie de l'ensemble d'embrayage concerné, se trouve ou peut être amené en liaison d'entraînement en rotation avec le premier ou respectivement le deuxième arbre d'entrée de boîte,
sachant que la partie porteuse (46) du porte-disques extérieur (32) associé au groupe de disques radialement intérieur (26) est maintenue sur la partie (48) de maintien de disques du porte-disques extérieur (28) associé au groupe de disques radialement extérieur, et s'étend radialement vers l'intérieur depuis celle-ci.

13. Système d'embrayage selon la revendication 12, **caractérisé en ce que** les ensembles d'embrayage sont respectivement réalisés avec un cylindre hydraulique récepteur intégré (56, 58), conjointement rotatif en service, par l'intermédiaire duquel l'ensemble d'embrayage respectif peut être actionné par voie hydraulique, **en ce qu'**une chambre de cylindre récepteur (64) du cylindre récepteur (56) servant à actionner le groupe de disques radialement extérieur (22) est formée entre un entraîneur (310), couplant le moyeu d'entrée (40) à la partie (48) de maintien de disques du porte-disques extérieur (28) associé à ce groupe de disques, et un piston d'actionnement (60) du cylindre récepteur, et **en ce que** le piston d'actionnement présente des parties d'actionnement s'étendant essentiellement en direction axiale auxquelles sont associés des évidements dans la partie porteuse (46) du porte-disques extérieur (32) associé au groupe de disques radialement intérieur (26), afin de pouvoir agir par les évidements sur le groupe de disques radialement extérieur (22).

14. Système d'embrayage selon la revendication 13, **caractérisé en ce qu'**une chambre de cylindre récepteur (66) du cylindre récepteur (58) servant à actionner le groupe de disques radialement intérieur (26) est formée entre une paroi (98) et un piston d'actionnement (62) du cylindre récepteur, la paroi (98) délimitant une chambre de compensation de pression centrifuge qui est associée au piston d'actionnement (60) de l'ensemble d'embrayage (20) pourvu du groupe de disques radialement extérieur (22).

15. Ligne d'entraînement de véhicule automobile, comprenant une unité d'entraînement réalisée de préférence sous forme de moteur thermique, une boîte de vitesses, notamment une boîte de vitesses commandée en charge, et un système d'embrayage selon l'une quelconque des revendications précédentes.
